(19) Europäisches Patentamt
European Patent Office
Office européen des brevets

(11) **EP 3 437 731 A1**

## EUROPEAN PATENT APPLICATION
published in accordance with Art. 153(4) EPC

(43) Date of publication:
**06.02.2019 Bulletin 2019/06**

(21) Application number: 17774213.7

(22) Date of filing: **10.03.2017**

(51) Int Cl.:
*B01J 20/28* [(2006.01)]    *B01D 53/62* [(2006.01)]
*B01D 53/81* [(2006.01)]    *B01J 20/22* [(2006.01)]
*C07F 9/54* [(2006.01)]

(86) International application number:
**PCT/JP2017/009803**

(87) International publication number:
**WO 2017/169669 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.03.2016 JP 2016068603**

(71) Applicant: **Osaka Gas Co., Ltd.**
**Osaka-shi, Osaka 541-0046 (JP)**

(72) Inventors:
• **UEDA Kentaro**
  **Osaka-shi**
  **Osaka 541-0046 (JP)**
• **KISHIMOTO Akira**
  **Osaka-shi**
  **Osaka 541-0046 (JP)**
• **NAKAYAMA Saki**
  **Osaka-shi**
  **Osaka 541-0046 (JP)**

(74) Representative: **Lemcke, Brommer & Partner**
**Patentanwälte Partnerschaft mbB**
**Siegfried-Kühn-Straße 4**
**76135 Karlsruhe (DE)**

(54) **GAS ABSORBING MATERIAL, CARBON DIOXIDE SEPARATION AND RECOVERY SYSTEM, AND CARBON DIOXIDE SEPARATION AND RECOVERY METHOD**

(57)    A gas sorbent is characterized in that a gas sorbing material that undergoes a phase change from solid to liquid at time of gas sorption and also undergoes a phase change from liquid to solid at time of gas desorption is supported in a carrier and the sorbent keeps its solid-like outer shape before/after the phase changes of the gas sorbing material.

Fig.1

**Description**

**Technical Field:**

The present invention relates to a gas sorbent for sorbing a carbon dioxide for example.

**Background Art**

In recent years, the increasing carbon dioxide concentration in the atmosphere has been seen as a problem as one cause of the global warming. In particular, for such large-scale facilities as thermal power plants, steelworks blast furnaces that emit large amounts of carbon dioxide, reduction in the carbon dioxide emission amounts is being required.

As a method of reducing carbon dioxide emissions, there has been proposed a method of using a carbon dioxide separation recovery apparatus for sorbing carbon dioxide contained in exhaust gas. This carbon dioxide separation recovery apparatus includes a carbon dioxide sorbent represented by an amine-based solution and activated carbon. The apparatus can effect separation/recovery of carbon dioxide in exhaust gas in a continuous manner by repeating in alternation two steps, namely, an sorbing step at which the carbon dioxide sorbent is placed into contact with exhaust gas at a relatively low temperature to sorb carbon dioxide and a regenerating step at which the sorbent is heated for desorbing the carbon dioxide therefrom, thus regenerating this carbon dioxide sorbent.

The most thermal energy consuming process in the carbon dioxide separation and recovery apparatus is the regenerating step, whose energy consumption amount directly influences the process cost. For this reason, various researches have been conducted in various places in an attempt to reduce the thermal energy at the regenerating step (see e.g. Non-Patent Document 1).

**Background Art Document**

**Non-Patent Document**

Non-Patent Document 1: Ronald S. Eisinger et al., Energy Fuels, 28, pp. 7070-7078 (2014)

**Summary of the invention**

**Problem to be Solved by Invention**

The above-identified Non-Patent Document 1 discloses a technique of using carbon dioxide sorbent in a liquid form. However, even with this technique, its effect for reducing thermal energy at the regenerating process is not sufficient, so there remains room for improvement.

An object of the present invention is to provide a novel gas sorbent having a high effect of reducing thermal energy required for desorption of sorbed gas.

**Solution**

A gas sorbent according to the present invention is characterized in that a gas sorbing material that undergoes a phase change from solid to liquid at time of gas sorption and also undergoes a phase change from liquid to solid at time of gas desorption is supported in a carrier and that the sorbent keeps its solid-like outer shape before/after the phase changes of the gas sorbing material.

With the above-described arrangement, solidification heat generated when the gas sorbing material undergoes the phase change from solid to liquid at time of gas sorption compensates for a part of the gas desorption heat, so the thermal energy required for gas desorption can be reduced. Moreover, since the inventive sorbent keeps its solid-like outer shape before/after the phase changes of the gas sorbing material, it can be handled easy compared with the liquid form one.

According to a further feature of the inventive gas sorbent, the carrier comprises porous inorganic particles.

With the above arrangement, gas is sorbed by the gas sorbing material incorporated within numerous pores of the porous inorganic particles, so gas can be sorbed very efficiently.

According to a further feature of the inventive gas sorbent, the gas sorbing material incorporated within the pores of the porous inorganic particles is sealed within the pores with a resin.

With the above arrangement, it is possible to prevent elution of the gas sorbing material from the porous inorganic particles.

According to a further feature of the inventive gas sorbent, the carrier comprises capsules.

With the above-described arrangement, the sorbent can be manufactured easily by the known micro encapsulation technique.

According to a further feature of the inventive gas sorbent, the gas sorbing material comprises an ionic liquid.

With the above-described arrangement, it is possible to manufacture a gas sorbent that has a high gas sorbing performance especially for carbon dioxide.

According to a further feature of the inventive gas sorbent, the ionic liquid is tetraethylphosphonium benzimidazolide or tetraethylammonium imidazolide.

With the above-described arrangement, it is possible to manufacture a gas sorbent that has an even higher gas sorbing performance especially for carbon dioxide.

According to a further feature of the inventive gas sorbent, the gas sorbent has an average particle diameter of 0.1 $\mu$m or more and less than 1 mm.

With the above-described arrangement, it is possible to effectively secure contact area with un-processed gas containing carbon dioxide and also to secure appropriate fluidity or gas permeability when the sorbent is mounted on the adsorption apparatus.

According to a further feature of the inventive gas sorbent, the gas comprises carbon dioxide.

With the above-described arrangement, it is possible to carry out separation/recovery of carbon dioxide contained in e.g. exhaust gas in an efficient manner.

According to a characterizing feature of an inventive carbon dioxide separation recovery system, the system uses the inventive gas sorbent described above.

With the above-described arrangement, it is possible to reduce thermal energy required for desorption of gas, so that carbon dioxide can be separated and recovered, while achieving energy saving also.

According to a further characterizing feature of the inventive carbon dioxide separation recovery system, the system is configured to separate and recover carbon dioxide contained in industrial exhaust gas.

With the above-described arrangement, it is possible to carry out separation/recovery operation of a great amount of carbon dioxide in an efficient manner.

According to a characterizing feature of an inventive carbon dioxide separation recovery method, the method employs the inventive gas sorbent described above.

With the above-described arrangement, it is possible to reduce thermal energy required for desorption of gas, so that carbon dioxide can be separated and recovered, while achieving energy saving also.

According to a further characterizing feature of the inventive carbon dioxide separation recovery method, the method is configured to separate and recover carbon dioxide contained in industrial exhaust gas.

With the above-described arrangement, it is possible to carry out separation/recovery operation of a great amount of carbon dioxide in an efficient manner.

**Brief Description of Drawings**

Fig. 1 is a schematic configuration diagram of a temperature swing adsorption apparatus as one example of a carbon dioxide separation recovery system using a gas sorbent,
Fig. 2 is a graph showing changes over time of a thermogravimetric analysis value (TG) and a differential thermal analysis value (DTA) in a carbon dioxide sorption/desorption test of gas sorbent, and
Fig. 3 is a graph showing changes over time of a thermogravimetric analysis value (TG) and a differential thermal analysis value (DTA) in a carbon dioxide sorption/desorption test of gas sorbent.

**Modes of Embodying the Invention**

[Embodiment]

Next, a gas sorbent, a carbon dioxide separation recovery system and a carbon dioxide recovery method relating to the instant embodiment will be explained.

The gas sorbent according to the instant embodiment is characterized a gas sorbing material that undergoes a phase change from solid to liquid at time of gas sorption and also undergoes a phase change from liquid to solid at time of gas desorption is supported on a carrier and the sorbent keeps its solid-like outer shape before/after the phase changes of the gas sorbing material.

(Carrier)

Examples of the carrier usable in the gas sorbent of the present embodiment include capsules, porous inorganic particles, and the like.

As the capsule, for example, a core shell type capsule, a sea-island structure type capsule, etc. which are configured so that the gas sorbing material is not exposed on the surface are preferred. Namely, the gas sorbing material is disposed inside, and the outside of the gas sorbing material is covered with a membrane or an outer shell.

As the porous inorganic particles, it is preferable that the porous inorganic particles penetrate to the surface, but, due to their small pore diameter, not elute even if the gas sorbing material liquefies.

Examples of inorganic substance forming the porous inorganic particle include a silicate, a phosphate, an oxide, and the like. Examples of the silicate include calcium silicate, barium silicate, magnesium silicate, zeolite and the like. As the phosphate, for example, calcium phosphate, barium phosphate, magnesium phosphate, zirconium phosphate, apatite and the like can be cited. As the oxide, for example, silicon oxide such as silicon dioxide and silicon monoxide, alumina and the like can be cited. Preferably, it is an oxide, more preferably silicon oxide, still more preferably silicon dioxide.

The porous inorganic particle has a spherical shape including a true spherical shape, or an irregular shape. Porous inorganic particles are generally aggregates of secondary particles or the like in which primary particles are agglomerated with each other.

When the porous inorganic particles are composed of silicon dioxide and have an irregular shape, they will be produced by e.g. a wet process, a dry process, or the like. Preferably, they are produced by the wet process. In the wet process, there are a sedimentation process and a gel process, in which silicon dioxide is generated by neutralizing water glass (an aqueous sodium silicate solution) with a mineral acid such as sulfuric acid. In the sedimentation process, with progress of a neutralization reaction under a high temperature condition and in an alkaline pH range, the growth of primary particles of silicon dioxide proceeds rapidly, causing the primary particles to settle in floc form. In the gel process, by with progress of a neutralization reaction in an acidic pH range, agglomeration is carried out in a state where the growth of the primary particles is suppressed, and the whole reaction solution is converted into a single floc of gel by a three-dimensional mesh-like structure. The gel process is preferable because of smaller primary particles and a larger pore volume than the sedimentation process.

In case where the porous inorganic particles are composed of silicon dioxide and have a true spherical shape, they will be produced through generation of silicon dioxide by the wet process in water phase droplets of a desired size dispersed and stabilized in an inert solvent such as a hydrocarbon.

Further, the pores of the porous inorganic particles mean the pores inside the primary particles forming the porous inorganic particles as well as the voids or gaps present between the primary particles.

The pore volume of the porous inorganic particles means the total volume (mL) of pores per unit mass (g) in the primary particles forming the porous inorganic particles and can be measured by a nitrogen gas sorption method. The pore volume (the total volume of the pores of the primary particles) of the porous inorganic particles is e.g. 1.0 mL/g or more, preferably 1.5 mL /g or more, and e.g. 3.0 mL /g or less.

The specific surface area of the porous inorganic particles is e.g. 150 $m^2$/g or more, preferably 300 $m^2$/g or more, and e.g. 1000 $m^2$/g or less. The specific surface area is measured by the simple BET method.

The oil sorption amount of the porous inorganic particles is a total volume (mL) of the pore volume inside the primary particles forming the porous inorganic particles, the void volume between the primary particles, and the minimum capacity of the oil wetting the surface of the secondary particles, per 100 g of the porous inorganic particles. The oil sorption amount is measured according to JIS K 5101-13-2 (2004). The oil sorption amount of the porous inorganic particles is e.g. 100 mL /100 g or more, preferably 250 mL / 100 g or more, and e.g. 500 mL / 100 g or less.

The average value (the average particle size in case they have a spherical shape) of the maximum length of the porous inorganic particles is 0.1 $\mu$m or more, and less than 1 mm, more preferably, 100 $\mu$m or more and less than 1mm.

(Gas Sorbing Material)

The gas sorbing material usable in the gas sorbent undergoes a phase change from solid to liquid at the time of gas sorption and a phase change from liquid to solid at the time of gas desorption. As such gas sorbing material, for example, in the case where the target gas is steam, substances having deliquescent properties such as citric acid, sodium hydroxide, potassium carbonate, magnesium chloride, calcium chloride and the like can be cited. When the target gas is carbon dioxide, examples of the gas sorbing material include ionic liquids such as tetraethylphosphonium benzimidazolide and tetraethylammonium imidazolide.

(Resin)

The resin is used for sealing the gas sorbing material incorporated within the pores of the porous inorganic particles described above. The resin is a cured product obtained by curing a vinyl monomer solution of a low molecular weight polymer (hereinafter referred to as "curable resin") containing a plurality of vinyl polymerization reactive double bonds in the molecule.

The vinyl monomer solution is a curable resin composition in which a curable resin is dissolved with a liquid vinyl monomer at room temperature (25 °C), preferably a curable resin and a vinyl monomer alone, and does not contain any nonreactive solvent such as of a ketone type such as methyl ethyl ketone.

The curable resin composition is vinyl polymerizable. Depending on selections of an polymerization initiator to be described later and a polymerization promoter to be also described later, the curable resin composition will be made into a room-temperature curing type thermosetting resin composition, or a high temperature curing type thermosetting resin composition, or an active energy ray curable type resin composition such as ultraviolet ray, an electron beam, etc.

Examples of the curable resin include unsaturated polyester, epoxy (meth) acrylate, urethane (meth) acrylate and the like. Preferably, an unsaturated polyester is cited from the viewpoint of cost advantage and possibility of obtaining resins having a variety of performances. Examples of the active energy ray-curable resin include urethane (meth) acrylate and the like. As the thermosetting resin, an unsaturated polyester is cited preferably.

The unsaturated polyester is obtained by condensation polymerization of a dibasic acid component containing an unsaturated dibasic acid and a dihydric alcohol (diol) component.

Specific examples of the unsaturated dibasic acid include $\alpha$, $\beta$-unsaturated dibasic acids such as maleic acid, fumaric acid, methylfumaric acid (mesaconic acid), methylmaleic acid (citraconic acid), aconitic acid, itaconic acid and the like. As the unsaturated dibasic acid, an anhydride of the above-mentioned $\alpha$, $\beta$-unsaturated dibasic acid (concretely, maleic anhydride, citraconic anhydride, etc.) can also be cited. These can be used alone, or two or more kinds thereof can be used in combination. Preferable examples of the unsaturated dibasic acid include fumaric acid and maleic anhydride, more preferably maleic anhydride.

The content ratio of the unsaturated dibasic acid in the dibasic acid component is e.g. 20% or more, preferably 40% or more, and e.g. 80% or less, preferably 60% or less, on the molar basis.

The dibasic acid component may contain a saturated dibasic acid in addition to the above unsaturated dibasic acid. Specific examples of the saturated dibasic acid include phthalic anhydride, isophthalic acid, terephthalic acid, tetrahydrophthalic anhydride, tetrachlorophthalic anhydride, 3,6-endomethylenetetrahydrophthalic anhydride (anhydrous nadic acid), adipic Acid, pimelic acid, suberic acid, azelaic acid, sebacic acid and the like. The saturated dibasic acid is preferably phthalic anhydride or adipic acid, more preferably phthalic anhydride. From the viewpoint of lowering the viscosity of the unsaturated polyester resin or making the cured product flexible, it will be effective to select saturated fatty acid dicarboxylic acid or the like having 6 or more and 10 or less carbon atoms such as adipic acid, pimelic acid, suberic acid, azelaic acid, sebacic acid.

The content ratio of the saturated dibasic acid in the dibasic acid component is 20% or more, preferably 40% or more, and e.g. 80% or less, preferably 60% or less, on the molar basis. The content ratio of the saturated dibasic acid to 100 mol parts of the unsaturated dibasic acid is e.g. 50 mol parts or more, preferably 75 mol parts or more, and e.g. 150 mol parts or less, preferably 125 mol part or less .

Examples of the dihydric alcohol component include ethylene glycol, propylene glycol, 1,3-butylene glycol, 1,4-butylene glycol, diethylene glycol, dipropylene glycol, neopentyl glycol, 2,2-bis (4-hydroxycyclohexyl) propane hydrogenated bisphenol A), bisphenol A propylene oxide adduct, bisphenol A ethylene oxide adduct, and the like. From the viewpoint of softening the cured product, propylene glycol and diethylene glycol are preferred. These dihydric alcohol components may be used alone, or two or more of them may be used in combination, but a combination of propylene glycol and diethylene glycol is preferred.

The unsaturated polyester is obtained by mixing the above-mentioned dibasic acid component and the above-mentioned dihydric alcohol component, so that e.g. the molar ratio of the dihydric alcohol component to the dibasic acid component is 1.00 or more and 1.10 or less and then subjected to a condensation polymerization by heating. The reaction temperature is e.g. 180°C or more and 220 °C or less. The reaction time is e.g. 3 hours or more and 20 hours or less.

In the above-described condensation polymerization of the dibasic component and the dihydric alcohol component, in order to inhibit the addition polymerization (vinyl polymerization) of the unsaturated dibasic acid, it is preferable that a polymerization inhibitor (first polymerization inhibitor) be added to the mixture of the dibasic acid component and the dihydric alcohol component.

Examples of the polymerization inhibitor include a hydroquinone compound, a benzoquinone compound, a catechol compound, a phenol compound, phenothiazine, copper naphthenate and the like. Examples of the hydroquinone compound include hydroquinone, methyl hydroquinone, and the like. As the benzoquinone compound, benzoquinone, methyl-p-benzoquinone and the like can be mentioned. As the catechol compound, e.g. t-butyl catechol and the like can be mentioned for example.

Examples of the phenol compound include 2,6-di-t-butyl-4-methylphenol, 4-methoxyphenol (hydroquinone methyl ether) and the like. These can be used alone or in combination of two or more. A preferred polymerization inhibitor is hydroquinone.

The addition ratio of the polymerization inhibitor is e.g. 1 ppm or more, preferably 10 ppm or more, and e.g. 100 ppm or less, based on the mass of the mixture of the dibasic acid component and the dihydric alcohol component.

Incidentally, the unsaturated polyester can also be obtained by, for example, ring-opening polymerization. Specifically, such ring-opening polymerization can be carried out, with using a polyhydric alcohol as an initiator, if needed in combination with a polymerization catalyst, and using maleic anhydride as an essential component as a dibasic acid component, an acid anhydride such as phthalic anhydride, tetrahydrophthalic anhydride or the like, and using propion oxide, ethylene oxide, butylene oxide, styrene oxide, epichlorohydrin as a monomer as a dihydric alcohol component. Furthermore, the polymer obtained by ring-opening polymerization may be produced also with enhancement of its degree of polymerization through condensation polymerization.

The acid value of the unsaturated polyester is e.g. not less than 5 [mg KOH/g], preferably not less than 10 [mg KOH/g], and not more than 80 [mg KOH/g], preferably not more than 40 [mg KOH/g]. The acid value of the unsaturated polyester is measured in accordance with JIS K 6901-A method (2008).

Epoxy (meth) acrylate is also referred to as vinyl ester. The epoxy (meth) acrylate can be obtained, for example, by the following method (1) or method (2). In the method (1), a bisphenol type epoxy resin is reacted with an unsaturated carboxylic acid such as (meth) acrylic acid (i.e. acrylic acid and/or methacrylic acid) in the presence of a catalyst such as a tertiary amine; and by opening the epoxy ring with a carboxyl group, an ester bond is formed. In the method (2), for example, the carboxyl group terminal of the unsaturated oligoester is reacted with the epoxy group of the epoxy group-containing acrylate such as glycidyl (meth) acrylate in the presence of a catalyst such as tertiary amine Then, the epoxy ring is opened with a carboxyl group to introduce an ester bond.

The urethane (meth) acrylate is obtained by reacting a diisocyanate such as isophorone diisocyanate with a hydroxy group of a hydroxy group-containing (meth) acrylate such as 2-hydroxyethyl methacrylate in the presence of a catalyst such as dibutyltin dilaurate And, it is an oligomer containing a urethane bond and an ester bond.

As the vinyl monomer, a monomer which is liquid at room temperature and has the property of performing addition polymerization by radical initiation (vinyl polymerization) is selected. Further, the vinyl monomer dissolves the curable resin to lower the viscosity and has properties as a crosslinking agent that vinyl copolymerizes with the unsaturated double bond of the curable resin. Examples of such vinyl monomers include monofunctional vinyl monomers such as styrene type monomers and (meth) acrylate type monomers, and preferably styrene type monomers. Specific examples of the styrenic monomer include styrene, methylstyrene ($\alpha$-methylstyrene, $\beta$-methylstyrene), tert-butylstyrene, chlorostyrene (o-chlorostyrene, m-chlorostyrene, p-chlorostyrene) and the like. Examples of the (meth) acrylic acid ester type monomer include methyl (meth) acrylate, ethyl (meth) acrylate, isopropyl (meth) acrylate, butyl (meth) acrylate, 2-hydroxyethyl (meth) acrylate methylate, and the like. These vinyl monomers can be used alone or in combination of two or more.

The mixing ratio of the vinyl monomer is e.g. 30 parts by mass or more, preferably 70 parts by mass, and e.g. 150 parts by mass or less, preferably 130 parts by mass or less with respect to 100 parts by mass of the curable resin. The mixing ratio of the vinyl monomer is e.g. 35% by mass or more, more preferably 51% by mass or more, and e.g. 55% by mass or less and preferably, 53% or less by mass, with respect to the total amount (amount of the resin) of the curable resin and the vinyl monomer.

When the mixing ratio of the vinyl monomer is not less than the above-mentioned lower limit, the viscosity of the curable resin composition can be reduced and the curable resin composition is rapidly sorbed/supported in the pores of the porous inorganic particles. On the other hand, if the mixing ratio of the vinyl monomer is not more than the above upper limit, a resin (cured product) having a high crosslink density can be obtained.

The vinyl monomer solution of the curable resin is prepared by mixing the above-mentioned curable resin and vinyl monomer at the above-mentioned ratio. Specifically, in the production of the curable resin, after completion of the reaction, cooling is carried out to prepare a curable resin having sufficient fluidity and injected into a separately prepared vinyl monomer under stirring ("hot dilution"). In the production of the curable resin, it may be prepared by a method of cooling to room temperature after completion of the reaction, injecting a vinyl monomer into a highly viscous curable resin and dissolving it ("cold dilution").

Incidentally, when the curable resin is an unsaturated polyester, the vinyl monomer solution of the curable resin is an unsaturated polyester resin. When the curable resin is epoxy (meth) acrylate, the vinyl monomer solution of the curable resin is epoxy acrylate resin. And, when the curable resin is urethane (meth) acrylate, the vinyl monomer solution of the curable resin is a urethane acrylate resin.

Further, the unsaturated polyester resin can be prepared by the above-described method, but a commercially available product may be used instead. Such commercially available unsaturated polyester resin can be selected from among polyhope series of Japan Composite Co., Ltd., Sundome series of DIC Materials Co., Ltd., Rigolac series of Showa Denko Co., etc. that allows adjustment of predetermined physical properties thereof described below, with reference to its physical property values indicated in the product test chart, composition analysis values obtained by NMR and the like. Likewise, as the epoxy acrylate resin, Neopole series manufactured by Nippon Yupika Co., Ltd., vinyl ester series manufactured by DIC Materials Co., Ltd., and the like can be used. Examples of urethane acrylate include UPICA series manufactured by Japan UPICA Corporation.

The obtained curable resin composition is adjusted so as to obtain room temperature gelling time and viscosity suitable for the use of this embodiment. Next, explanation will be made by taking as an example the case of an unsaturated polyester resin which is a room temperature curable thermosetting resin composition.

First, the sorption rate (the rate of incorporation into the pores) of the unsaturated polyester resin to the porous inorganic particles needs to be sufficiently high. For this purpose, the viscosity of the unsaturated polyester resin at 23 °C is adjusted to, for example, 100 mPa · s or less, preferably 70 mPa · s or less.

The viscosity of the vinyl monomer solution is measured by a BM type viscometer. When the viscosity of the unsaturated polyester resin falls within the above range, incorporation of the vinyl monomer solution can be carried out in a short time without lowering the rate of incorporation of the unsaturated polyester resin into the pores of the porous inorganic particles, Further, by sufficiently incorporating the vinyl monomer solution into the pores, it is possible to suppress the phenomenon of it remaining on the surface of the porous inorganic particles.

Adjustment of the viscosity is carried out by post-addition of the vinyl monomer. As described above, the total amount of the vinyl monomer is e.g. 55% by mass or less, preferably 53% by mass or less, based on the total amount of the unsaturated polyester resin.

Next, the room temperature gelling time in room temperature curing is adjusted. The room temperature gelling time is measured in accordance with JIS K 6901-A method (2008). The room temperature gelling time is adjusted to e.g. 10 minutes or more, preferably 20 minutes or more, and to e.g. 2 hours or less, preferably 1 hour or less.

If the room temperature gelling time of the unsaturated polyester resin is not lower than the above-mentioned lower limit, at step (2) to be described later, before the unsaturated polyester resin is cured, the unsaturated polyester resin is reliably present within the pores of the porous inorganic particle. Namely, when the room temperature gelling time of the unsaturated polyester resin is less than the lower limit described above, curing of the unsaturated polyester resin is started before the unsaturated polyester resin is incorporated into the pores of the porous inorganic particles, so the unsaturated polyester resin may not be reliably incorporated into the pores of the porous inorganic particles.

On the other hand, if the room temperature gelling time of the unsaturated polyester resin is equal to or less than the above-mentioned upper limit, at step (2), it is possible to prevent the phenomenon that the gas sorbing material taken into the pores of the porous inorganic particles contained in the vinyl monomer solution elutes into the vinyl monomer and subsequently migrates to the surface of the porous inorganic particle.

And, when the room temperature gelling time of the unsaturated polyester resin is not more than the above-mentioned upper limit, the unsaturated polyester resin can be cured even more rapidly and with even higher crosslinking density at step (3) to be described later.

The room-temperature curing type unsaturated polyester resin is prepared by mixing a polymerization promoter, or, when needed, a polymerization promoter aid in combination with a polymerization retarder ("second polymerization inhibitor") in the unsaturated polyester resin. Examples of the polymerization promoter include oxidizing metal soaps such as cobalt octylate and cobalt naphthenate. Examples of the polymerization promoter aid include aromatic amines such as dimethylaniline and carbonyl compounds such as acetylacetone. Examples of the polymerization retarder include hydroquinone methyl ether, hydroquinone and the like.

The adjustment of the room temperature gelling time can be carried out as follows, for example.

In accordance with JIS K 6901-A method (2008), a predetermined amount of a polymerization promoter and, if needed, a predetermined amount of a polymerization promoter aid is/are blended in a predetermined amount of the unsaturated polyester resin, and then an initiator (methyl ethyl ketone peroxide) is blended and the gelling time at room temperature is measured. At the same time, several different amounts of polymerization retarders ("second polymerization inhibitor") are mixed in the blended resin and the gelling time at room temperature is measured. Examples of the polymerization retarder (second polymerization inhibitor) include those exemplified as the first polymerization inhibitor. The amount of the polymerization retarder (second polymerization inhibitor) is e.g. 5 ppm or more and 1000 ppm or less based on the mass of the vinyl monomer as the active ingredient. The relationship between the amount of the polymerization retarder (second polymerization inhibitor) and the room temperature gelling time is represented by a graph, and the amount of the polymerization retarder (second polymerization inhibitor) corresponding to the desired room temperature gelling time is obtained. Thereafter, a predetermined amount of a polymerization promoter and, if needed, a polymerization promoter aid and a polymerization retarder (second polymerization inhibitor) in the amount obtained as described above are blended with respect to the unsaturated polyester resin described above, thus preparing an unsaturated polyester resin with controlled room temperature gelling time and viscosity.

In this embodiment, the polymerization promoter has a standard formulation that 6% cobalt naphthenate or 8% cobalt octylate is mixed with the unsaturated polyester resin in an amount of 0.5% by mass and no weight promoter aid is added. As regards the polymerization initiator, a method of mixing 1.0% by mass of 55% methyl ethyl ketone peroxide and measuring a room temperature gelling time is defined as the standard measurement method.

**(Producing Method)**

Next, a method of producing a gas sorbent relating to the instant embodiment will be explained by way of an example in which porous inorganic particles are employed as a "carrier".

The method for producing a gas sorbent according to the instant embodiment includes: step (1) of blending a liquid containing the gas sorbing material to the porous inorganic particles in such a manner that a ratio (V1/Voa) of the volume (V1) of the liquid relative to the oil sorptive capacity (Voa) of the porous inorganic particles is 0.7 or less, thus incorporating the gas sorbing material within pores of the porous inorganic particles; step (2) of blending a vinyl monomer solution of a curable resin as the resin to the porous inorganic particles in such a manner a ratio ((Vf+Vr)/Voa) of the total volume (Vf+Vr) of the gas sorbing material and the vinyl monomer solution to the oil sorptive capacity (Voa) of the porous inorganic particles is 0.7 or less, thus incorporating the vinyl monomer solution within the pores of the porous inorganic particles; and step (3) of curing the vinyl monomer solution to seal the functional components in the pores.

At the above step (1), a liquid containing a gas sorbing material is prepared. When the gas sorbing material is liquid at room temperature, the gas sorbing material is used as it is as a liquid. Preferably, if the viscosity of the gas sorbing material at 23 °C is 100 mPa · s or less, the gas sorbing material is used as it is as a liquid. The method of measuring the viscosity is the same as the above-described method of measuring the viscosity of the vinyl monomer solution.

On the other hand, if the viscosity of the gas sorbing material at 23 °C exceeds 100 mPa · s, the gas sorbing material will be diluted with a solvent to be described below to prepare a solution having 23 °C viscosity of e.g. 100 mPa · s or less, preferably, 70 mPa · s or less.

If the gas sorbing material is semi-solid or solid at the normal temperature, a solution of gas sorbing material will be prepared. Preferably, a solution having a viscosity at 23 °C of 100 mPa · s or less, preferably 70 mPa · s or less will be prepared. Specifically, if the gas sorbing material is semisolid or solid at room temperature, a solution will be prepared by dissolving the gas sorbing material in a solvent.

If the gas sorbing material is water insoluble, an organic solvent will be used as a solvent. Whereas, if the gas sorbing material is water soluble, water will be used as a solvent.

Examples of the organic solvent include aliphatic hydrocarbons, aromatic hydrocarbons, halogenated hydrocarbons, esters, ketones, alcohols, ethers and the like. As examples of the aliphatic hydrocarbons, hexane, cyclohexane, heptane, octane and the like can be cited.

Examples of the aromatic hydrocarbons include benzene, toluene, xylene and the like. Examples of halogenated hydrocarbons include dichloroethane, trichloroethane and the like. Examples of the esters include ethyl acetate, butyl acetate and the like. Examples of ketones include acetone, methyl ethyl ketone, methyl isobutyl ketone, and the like. Examples of alcohols include methanol, ethanol, propanol, isopropanol and the like. Examples of the ethers include 1,4-dioxane, tetrahydrofuran and the like. These organic solvents can be used alone or in combination of two or more. Preferred organic solvents are ketones and alcohols.

The mixing ratio of the solvent and the gas sorbing material is adjusted so that the viscosity of the solution at 23 °C is preferably 100 mPa · s or less, more preferably 70 mPa · s or less. Specifically, the mixing ratio of the gas sorbing material is preferably 30 mass% or more, preferably 50 mass% or more, and e.g. 80 mass% or less, with respect to the total amount of the solvent and the gas sorbing material. In these ways, the mixing ratio of the solvent and gas sorbing material will be adjusted.

Next, a liquid containing a gas sorbing material is added to the porous inorganic particles. Specifically, for example, porous inorganic particles are weighed into a sealed vessel equipped with a stirrer, and a liquid containing a gas sorbing material is dropped under stirring. In this, the total volume of the volume (Vf) of the gas sorbing material and the volume (Vs) of the solvent, i.e. the ratio (V1/Voa) of the volume (Vl) of the liquid containing the gas sorbing material to the oil sorptive capacity (Voa) of the porous inorganic particles, will be adjusted to be 0.7 or less. However, it is assumed here that the density of the liquid containing the gas sorbing material is 1.0 g/mL.

Incidentally, shown in the following equation, the oil sorptive capacity Voa (mL) of the porous inorganic particles is a capacity obtained by multiplying an oil sorption amount (mL/g) per 1 g of porous inorganic particles converted from the oil sorption amount Vo (mL/100 g) of the porous inorganic particles by the mass M (g) of the porous inorganic particle.

$$\mathrm{Voa\ (mL) = Vo\ (mL\ /100\ g)\ /\ 100 \times M\ (g)}$$

The oil sorption amount Vo (mL /100 g) of the porous inorganic particles represents the volume (mL) of the total $(V_1+V_2+V_3)$ of the pore volume $(V_1)$ inside the primary particle forming the porous inorganic particle, the void volume

($V_2$) between the adjacent primary particles, and the minimum volume ($V_3$) at which the surface of the secondary particles can wet the oil, per 100g of the porous inorganic particles. On the other hand, if a liquid containing a gas sorbing material is dropped to the total ($V_1+V_2+V_3$), not all of the gas sorbing material can be supported within the porous inorganic particles. In that case, the total volume ($V_1 + V_2$) of the pore volume ($V_1$) inside the primary particle and the void volume ($V_2$) between the primary particles will exceed 70% of the oil sorptive capacity Voa as shown by the following formula.

$$0.7 < (V_1 + V_2) / Voa < 1.0$$

Therefore, in the instant embodiment, the liquid containing the gas sorbing material is blended into the porous inorganic particles in such a manner that the ratio (Vl /Voa) of the volume (Vl) of the liquid relative to the oil sorptive capacity (Voa) of the porous inorganic particles is 0.7 or less.

In the above, the liquid containing a gas sorbing material may be blended with the porous inorganic particles at atmospheric pressure, or if the inside of the pores of the porous inorganic particles is evacuated by depressurization, it becomes possible to increase the sorption rate of the liquid containing the gas sorbing material to the porous inorganic particles. The stirring rate of the porous inorganic particles and the dropping time of the liquid containing the gas sorbing material may be appropriately adjusted.

Thereafter, when the liquid contains a solvent (that is, when the liquid is a solution), the solvent will be removed under the conditions of either room temperature and/or heating, or the atmospheric pressure and/or reduced pressure. With this, the gas sorbing material will be incorporated into the pores of the porous inorganic particles.

Also, in the above case, if only a liquid containing less than 30% by mass of gas sorbing material can be obtained, a desired amount of gas sorbing material can be incorporated into porous inorganic particles by performing step (1) for a plurality of rounds. Specifically, in the first round, a liquid containing a gas sorbing material is blended with porous inorganic particles, then the solvent is removed. Then, in the second round, a liquid containing a gas sorbing material is further added to the porous inorganic particles blended in the first round which incorporated the gas sorbing material, and then the solvent is removed. In the third round and rounds subsequent thereto, these operations will be repeated.

In the above, in the second round, the liquid of the second round is added to the porous inorganic particles in such a manner that a total volume: $Vf_1 + Vl_2$ of a volume $Vf_1$ of the gas sorbing material taken into the porous inorganic particles in the first round and a volume $Vl_2$ of the liquid to be blended in the second round will range 0.7 or less relative to the the oil sorptive volume Voa of the porous inorganic particles. The third and subsequent rounds will be conducted in the same as above.

That is, in the n-th round, the liquid of the n-th round will be added to the porous inorganic particles in such a manner that a total volume: $Vf_1 + Vf_2... + Vf_{n-1} + Vln (= \sum Vf_{n-1} + Vl)$ of the total volume: $Vf_1 + Vf_2... + Vf_{n-1} (= \sum Vf_{n-1})$ of the gas sorbing material which has been taken up in the porous inorganic particles to the n-1st round and the volume: $V1n (=Vf_n+Vs)$ of the liquid to be blended in the n-th round will range 0.7 or less, relative to the the oil sorptive volume Voa of the porous inorganic particles.

At the next step (2), the vinyl monomer solution of the curable resin is incorporated into the pores of the porous inorganic particles which have incorporated the gas sorbing material in the pores thereof.

While stirring the porous inorganic particles obtained at step (1), the vinyl monomer solution of the curable resin is dropped onto the porous inorganic particles. The stirring rate of the porous inorganic particles and the dropping time of the vinyl monomer solution may be appropriately adjusted.

To the vinyl monomer solution of the curable resin, a polymerization initiator is added before dropping onto the porous inorganic particles. The polymerization initiator is a radical polymerization initiator that acts as an initiator in the radical polymerization (vinyl polymerization) of step (3) described below. Examples of the polymerization initiator include a thermal polymerization initiator and a photopolymerization initiator. Specifically, examples of the thermal polymerization initiator include peroxy compounds such as acetylacetone peroxide, methyl ethyl ketone peroxide, diethyl ketone peroxide, methyl propyl ketone peroxide, methyl isobutyl ketone peroxide, methyl acetoacetate peroxide, ethyl acetoacetate peroxide, cyclohexanone peroxide, methylcyclohexanone peroxide, 3,3,5-trimethyl cyclohexanone peroxide, cumene peroxide, benzoyl peroxide, t-butyl isopropyl peroxy carbonate, 1,1-dibutyl peroxy-3,3,5 -trimethyl cyclohexanone, t-butyl peroxy-2-ethyl hexanoate, amyl peroxy-p-2-ethyl hexanoate, 2-ethylhexylperoxy-2-ethylhexanoate, t-butylperoxybenzoate, t-hexyl peroxybenzoate, etc. Preferably, it is methyl ethyl ketone peroxide. As an example of the photopolymerization initiator, a benzoin derivative can be cited. These polymerization initiators can be used alone or in combination of two or more.

The mixing ratio of the polymerization initiator is e.g. 0.1 parts by mass or more, preferably 0.3 parts by mass or more, and e.g. 5 parts by mass or less, preferably, 3 parts by mass or less, relative to 100 parts by mass of the curable resin vinyl monomer solution.

In the instant embodiment, when the vinyl monomer solution of the curable resin is an unsaturated polyester resin, a formulation of mixing 1% of 55% methylethyl peroxide to the vinyl monomer solution will be used as the standard formulation.

Then, the vinyl monomer solution of the curable resin is incorporated into the pores of the porous inorganic particles. Specifically, for example, a vinyl monomer solution of a curable resin mixed with a polymerization initiator is dropped while stirring a closed vessel equipped with a stirrer charged with the porous inorganic particles obtained from step (1). In this, the vinyl monomer solution of the curable resin may be dropped onto the porous inorganic particles at atmospheric pressure, or if the interior of the pores of the porous inorganic particles is kept in a vacuum state under reduced pressure, it is possible to increase the sorption rate of the vinyl monomer solution to the porous inorganic particles.

Subsequently, at step (3), the vinyl monomer solution of the curable resin incorporated in the pores of the porous inorganic particles is cured. If the vinyl monomer solution of the curable resin is a room temperature curable unsaturated polyester resin (room temperature curable unsaturated polyester vinyl monomer solution), it will be cured at room temperature (25°C) for 24 hours or more. In order to shorten the curing time, it is also possible to completely cure it by allowing it to stand at room temperature (25°C), for example, after 5 hours or more and then from 40°C to 60°C for 5 hours or more.

On the other hand, a vinyl monomer solution of a curable resin containing a photopolymerization initiator such as a benzoin derivative can be cured by irradiation with ultraviolet rays or an electron beam, for example. Particularly, in case where the porous inorganic particles are composed of silica, since ultraviolet transmittance of silica is high, ultraviolet curing can be suitably performed.

The aforementioned curing proceeds by vinyl copolymerization (radical copolymerization) of the vinyl group of the vinyl monomer and the unsaturated double bond of the curable resin. In the porous inorganic particles, the gas sorbing material is sealed by the cured resin.

At step (1), the ratio of the liquid containing the gas sorbing material to the oil sorptive capacity (Voa) of the porous inorganic particles is e.g. 0.4 or more, preferably 0.5 or more, and preferably 0.7 or less.

At step (2), the ratio ((Vf + Vr) / Voa) of the volume of the gas sorbing material and the total volume of the resin (Vf + Vr) to the oil sorptive capacity (Voa) of the porous inorganic particles is adjusted to 0.7 or less. Namely, the mixing is effected so as to satisfy the following formula. However, it is assumed here that the density of the vinyl monomer solution of the gas sorbing material and the curable resin is 1.0 g/mL.

$$(Vf + Vr)\,/Voa \leq 0.7$$

Here, when the ratio (Vf + Vr)/Voa exceeds 0.7, the vinyl monomer solution will not be entirely taken into the pores of the porous inorganic particles and the excessive vinyl monomer solution will adhere to the surface of the porous inorganic particles, so there is a possibility of agglomeration of the inorganic particles, resulting in production of lumpy cured product. In other words, when (Vf + Vr) / Voa is 0.7 or less, adhesion or bonding of mutually adjacent porous inorganic particles will be prevented, and the plurality of porous inorganic particles have excellent fluidity (smooth flowing) can be secured.

Further, (Vf + Vr) / Voa is e.g. 0.45 or more, preferably more than 0.45, more preferably 0.5 or more, even more preferably more than 0.5, still more preferably 0.6 or more .

If (Vf + Vr)/Voa exceeds the lower limit described above, the gas sorbing material and the resin can be contained in a sufficient amount with respect to the porous inorganic particles.

The ratio (Vr/Voa) of the volume (Vr) of the resin to the oil sorptive capacity (Voa) of the porous inorganic particles is e.g. 0.15 or more, preferably 0.2 or more, more preferably 0.3 or more, and e.g. 0.6 or less.

When Vr/ Voa is equal to or more than the above-mentioned lower limit, the porous inorganic particles can take in a sufficient amount of resin, thereby reliably sealing the gas sorbing material in the pores of the porous inorganic particles.

In addition, the ratio (mass of the gas sorbing material / mass of the vinyl monomer solution, namely, the mass of the gas sorbing material / the mass of the resin) of the mass of the gas sorbing material sorbed at step (1) to the mass of the curable resin vinyl monomer solution (i.e. the mass of the resin) is e.g. 2.0 or less, preferably 1.5 or less, more preferably 1.0 or less, further preferably 0.5 or less, and e.g. 0.01 or more, preferably 0.1 or more.

When the mass ratio of the gas sorbing material is not more than the above upper limit, the gas sorbing material will be reliably sealed in the pores of the porous inorganic particle with a sufficient amount of resin. Thus leakage of the gas sorbing material from the pores of the porous inorganic particles can be suppressed.

Further, the ratio of the total mass of the gas sorbing material and the vinyl monomer solution (resin) of the curable resin to the mass of the porous inorganic particles (the total mass of the gas sorbing material and the vinyl monomer solution (resin) of the curable resin / the mass of the porous inorganic particles) is e.g. 1.3 or more, preferably 1.5 or more, more preferably 1.7 or more, and e.g. 2.5 or less.

If the ratio of the total mass of the gas sorbing material and the vinyl monomer solution (resin) is not less than the above-mentioned lower limit, depending on the purpose, the gas sorbent can contain sufficient amounts of gas sorbing material and resin.

Further, when capsules are used as a carrier in the method of producing the gas sorbent according to the present embodiment, they can be produced by a conventionally known microencapsulation technique. Examples of such microencapsulation technique include an interfacial polymerization technique, an interfacial reaction technique, a coacervation technique, a submerged drying technique, a melt dispersion cooling technique, a submerged cured film technique, and the like.

(Gas)

Examples of gases usable for the gas sorbent of the instant embodiment include, but are not limited to, carbon dioxide, steam, and the like.

**(Carbon Dioxide Separation Recovery Method and Carbon Dioxide Separation Recovery System)**

The method for separation and recovery of carbon dioxide using the above gas sorbent includes an sorbing step at which carbon dioxide is sorbed by the gas sorbent placed in contact with the exhaust gas and a regenerating step at which the gas sorbing material is regenerated by being heated to desorb the carbon dioxide therefrom. By alternately repeating the sorbing step and the regenerating step, carbon dioxide in the exhaust gas can be continuously separated and recovered.

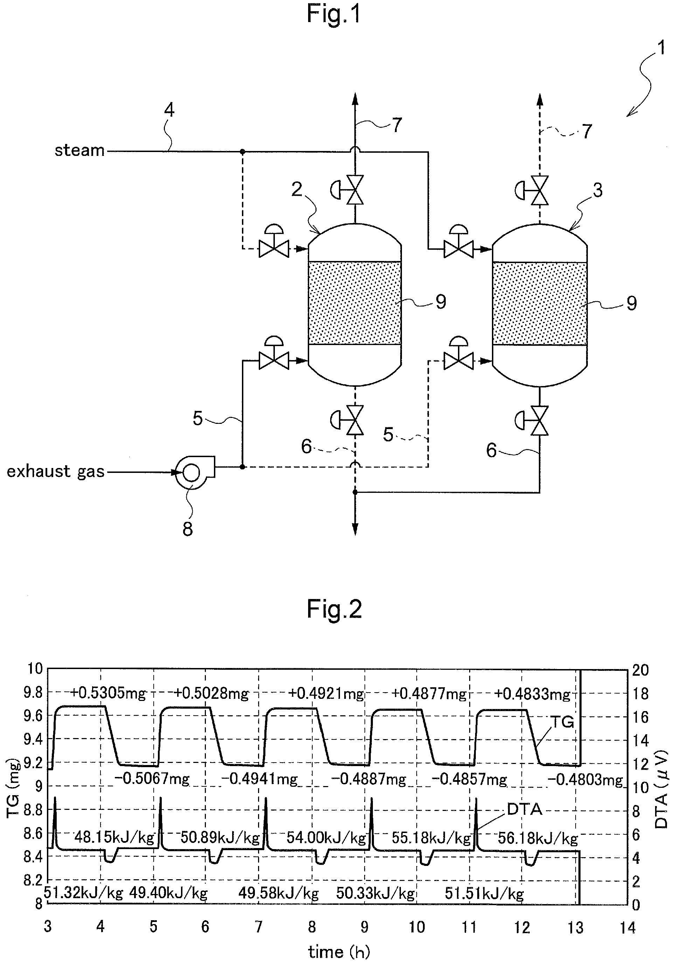

FIG. 1 shows a temperature swing adsorption (TSA) apparatus as an example of a carbon dioxide separation and recovery system using the gas sorbent described above.

The temperature swing adsorption apparatus 1 in this embodiment includes a first adsorption tank 2, a second adsorption tank 3, a steam supply line 4, an exhaust gas supply line 5, a carbon dioxide recovery line 6, an exhaust line 7, and a blower 8 , And the gas sorbent 9 described above is filled in each of the first adsorption tank 2 and the second adsorption tank 3.

Examples of the exhaust gas usable in the temperature swing adsorption apparatus 1 include industrial exhaust (emission) gases discharged from a thermal power plant, steelworks blast furnace, automobile or the like.

The exhaust gas is supplied to the first adsorption tank 2 through the exhaust gas supply line 5 for a predetermined time so that the carbon dioxide contained in the exhaust gas is sorbed by the gas sorbent 9. The remaining gas components are discharged via the exhaust line 7.

After a predetermined time has elapsed, the exhaust gas supply line 5 is switched so that the exhaust gas is supplied to the second adsorption tank 3 for a predetermined time, and high temperature steam is supplied to the first adsorption tank 2 for a predetermined time via the steam supply line 4 and heated. And the gas sorbent 9 is regenerated by desorbing carbon dioxide therefrom. The desorbed carbon dioxide is recovered via the carbon dioxide recovery line 6.

After a lapse of a predetermined time, the exhaust gas supply line 5 is switched to again supply the exhaust gas to the first adsorption tank 2 for a predetermined time, and the steam supply line 4 is switched so that steam is supplied to the second adsorption tank 3 for a predetermined time and heating is performed, whereby carbon dioxide is desorbed, and the gas sorbent 9 is regenerated.

That is, in either one of the first adsorption tank 2 and the second adsorption tank 3, the sorbing step of contacting the gas sorbent 9 with the exhaust gas to sorb carbon dioxide contained therein is effected, and on the other hand, the regenerating step of regenerating the gas sorbent 9 by heating it for desorption of carbon dioxide therefrom is effected. And, these steps will be switched over by a predetermined period. Therefore, it is possible to continuously separate and recover carbon dioxide in the exhaust gas.

In the above-described temperature swing adsorption apparatus 1, two adsorption tanks of the first adsorption tank 2 and the second adsorption tank 3 are used, but the present invention is not limited thereto. Instead, a greater number of adsorption tanks may be installed.

Further, the temperature swing adsorption apparatus 1 described above may be further provided with a condenser. Namely, since the recovered carbon dioxide contains moisture, this moisture can be removed by the condenser, so that carbon dioxide alone may be separated and recovered. The removed moisture can be reused as steam.

Moreover, the pressure swing technique may be used in combination in the above-described temperature swing adsorption apparatus, if needed. Or, the pressure swing technique alone may be adopted, in place of the temperature swing technique. In the pressure swing technique, during the regeneration process, the carbon dioxide recovery line is drawn by a pump to reduce the pressure in the adsorption tank to a reduced pressure, so that regeneration of the gas sorption material can be promoted.

[Other Embodiments]

In the above embodiment, in the case of using porous inorganic particles as the carrier, the resin may be provided only if/when needed.

The embodiment disclosed in the present description is an example, and the embodiment of the present invention is not limited thereto, but can be appropriately modified within a scope not deviating from the object of the present invention.

**(Example 1)**

**(Gas Sorbent Using Tetraethylphosphonium Benzimidazolide)**

Carbon dioxide sorption/desorption test was conducted on the gas sorbent of the instant embodiment.

Tetraethylphosphonium benzimidazolide (hereinafter referred to as TEPBI) was dissolved in methanol, then porous silica was added to the TEPBI solution under stirring, and methanol alone was evaporated by drying under a reduced pressure, whereby a sample of the gas sorbent of the instant embodiment was prepared. The prepared sample had a carrying amount of 50% by weight, calculated from the charged amount (TEPBI: porous silica = 50: 50).

10 mg of the above sample was placed in a platinum sample dish and allowed to stand in a thermogravimetric analyzer (TG-DTA 7300 manufactured by Hitachi High-Tech Science Co., Ltd.), while flowing nitrogen gas (purity 99.9999% or more) therethrough at 300 mL/ min. and allowed to stand at a temperature of 70 °C for three hours.

Then, it was switched to carbon dioxide gas (concentration of about 14% in nitrogen gas) and allowed to stand at a temperature of 70 °C for 1 hour while flowing at 300 mL /min. , then again switched to nitrogen gas (purity 99.9999% or more) to flow at 300 mL /min. and allowed to stand at a temperature of 70 °C for 1 hour. These alternate switching operations between carbon dioxide gas and nitrogen gas were repeated five times in total, in the course of which changes over time respectively of thermogravimetric analysis values (TG) and differential thermal analysis values (DTA) were measured. The results are shown in FIG. 2.

The amount of carbon dioxide sorbed was 0.0546 kg/kg. This corresponds to 71.8% of the maximum reactive amount of the TEPBI molecule (since 1 mol of TEPBI reacts with 1 mol of carbon dioxide, the TEPBI molecule sorbs up to 0.152 kg/kg of carbon dioxide).

Also, the heat of sorption of carbon dioxide was 41.6 kJ per 1 mol of carbon dioxide. This is clearly smaller than 54.7 kJ per mol of carbon dioxide described by Ronald S. Eisinger et al. (Ronald S. Eisinger et al., Energy Fuels, 28, pp. 7070-7078 (2014)).

Further, when a specific heat measurement was performed using a differential scanning calorimeter (DSC 3500 manufactured by NETCH Inc.), it was about 1.7 kJ / (kg · K) between 70°C and 90°C. Assuming that the temperature of the adsorption tank during the sorbing step is set to 70°C and the temperature of the adsorption tank during the regenerating step step is set to 90°C, then, the amount of heat required to raise the temperature of the gas sorbent from 70°C to 90°C (sensible heat) is 27.4 kJ per 1 mol of carbon dioxide, which is 69.0 kJ per mol of carbon dioxide in total with the heat of reaction. Converting this provides that the amount of heat required for the regeneration of the gas sorbent is 1.57 GJ per ton of carbon dioxide.

On the other hand, et al. in the literature of Ronald S. Eisinger et al., studies were made using a dispersion of 30 wt% of TEPBI in a liquid (30 wt% being the upper limit for handling in a slurry state in a fluid state), but in the case of the TEPBI solution, the sensible heat became as much as 45.6 kJ per 1 mol of carbon dioxide (calculated with a specific heat of 1.7) and became 86.3 kJ per mol of carbon dioxide in total with the heat of reaction. Converting this provides that the amount of heat required for regeneration is 1.96 GJ per ton of carbon dioxide, demonstrating that the inventive gas sorbent requires less quantity of heat for regeneration.

**(Example 2)**

**(Gas Sorbent Using Tetraethylammonium Benzimidazolide)**

Carbon dioxide sorption/desorption test was carried out on the gas sorbent of the instant embodiment.

Tetraethylammonium benzimidazolide (hereinafter referred to as TENBI) was dissolved in methanol, then porous silica was added to the TENBI solution under stirring, and methanol alone was evaporated by drying under a reduced pressure, whereby a sample of the gas sorbent of the instant embodiment was prepared. The prepared sample had a carrying amount of 40% by weight calculated from the charged amount (TENBI: porous silica = 40: 60).

10 mg of the above sample was placed in a platinum sample dish and allowed to stand in a thermogravimetric analyzer (TG-DTA 7300 manufactured by Hitachi High-Tech Science Co., Ltd.), while flowing nitrogen gas (purity 99.9999% or more) therethrough at 300 mL/ min. and allowed to stand at a temperature of 70 °C for three hours.

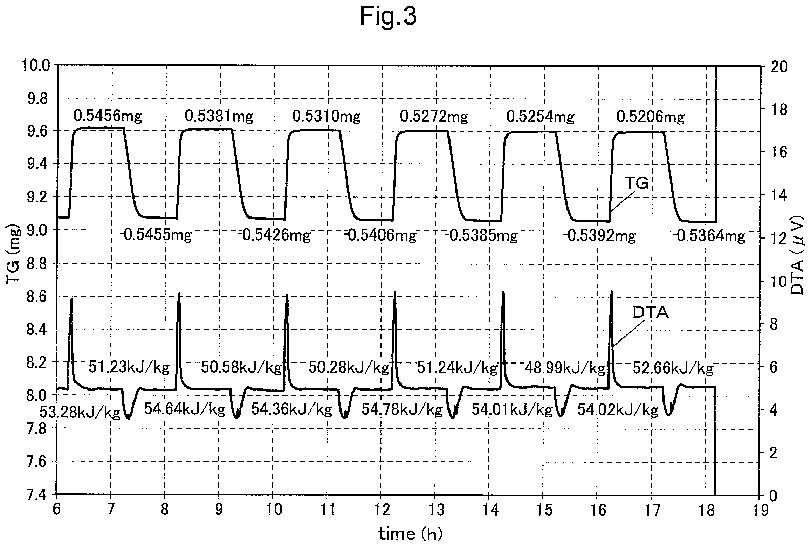

Then, it was switched to carbon dioxide gas (concentration of about 14% in nitrogen gas) and allowed to stand at a temperature of 70 °C for 1 hour while flowing at 300 mL /min., then again switched to nitrogen gas (purity 99.9999% or more) to flow at 300 mL /min. and allowed to stand at a temperature of 70 °C for 1 hour. These alternate switching operations between carbon dioxide gas and nitrogen gas were repeated five times in total, in the course of which changes over time respectively of thermogravimetric analysis values (TG) and differential thermal analysis values (DTA) were measured. The results are shown in FIG. 3.

The amount of carbon dioxide sorbed was 0.0586 kg/kg. This corresponds to 90.4% of the maximum reactive amount of the TENBI molecule (since 1 mol of TENBI reacts with 1 mol of carbon dioxide, the TENBI molecule sorbs up to 0.162 kg/kg of carbon dioxide).

Also, the heat of sorption of carbon dioxide was 39.4 kJ per 1 mol of carbon dioxide. This is clearly smaller than 54.7 kJ per mol of carbon dioxide described by Ronald S. Eisinger et al. (Ronald S. Eisinger et al., Energy Fuels, 28, pp. 7070-7078 (2014)).

Further, when a specific heat measurement was performed using a differential scanning calorimeter (DSC 3500 manufactured by NETCH Inc.), it was about 1.7 kJ / (kg · K) between 70°C and 90°C. Assuming that the temperature of the adsorption tank during the sorbing step is set to 70°C and the temperature of the adsorption tank during the regenerating step step is set to 90°C, then, the amount of heat required to raise the temperature of the gas sorbent from 70°C to 90°C (sensible heat) is 25.5 kJ per 1 mol of carbon dioxide, which is 64.9 kJ per mol of carbon dioxide in total with the heat of reaction. Converting this provides that the amount of heat required for the regeneration of the gas sorbent is 1.48 GJ per ton of carbon dioxide. This value is smaller than 1.96 GJ of the TEPBI solution (according to Ronald S. Eisinger et al.) and smaller also than 1.57 GJ of the gas sorbent (TEPBI) of Example 1.

**Industrial applicability**

The present invention can be suitably used in the field of technology for reducing carbon dioxide emissions.

**Description of Reference Marks (Numerals)**

1: temperature swing adsorption apparatus
2: first adsorption tank
3: second adsorption tank
4: steam supply line
5: exhaust gas supply line
6: carbon dioxide recovery line
7: exhaust line
8: blower
9: gas sorbent

**Claims**

1. A gas sorbent, wherein:

   a gas sorbing material that undergoes a phase change from solid to liquid at time of gas sorption and also undergoes a phase change from liquid to solid at time of gas desorption is supported in a carrier; and
   the sorbent keeps its solid-like outer shape before/after the phase changes of the gas sorbing material.

2. The gas sorbent of claim 1, wherein the carrier comprises porous inorganic particles.

3. The gas sorbent of claim 2, wherein the gas sorbing material incorporated within the pores of the porous inorganic particles is sealed within the pores with a resin.

4. The gas sorbent of claim 1, wherein the carrier comprises capsules.

5. The gas sorbent of any one of claims 1-4, wherein the gas sorbing material comprises an ionic liquid.

6. The gas sorbent of claim 5, wherein the ionic liquid is tetraethylphosphonium benzimidazolide or tetraethylammonium imidazolide.

7. The gas sorbent of any one of claims 1-6, wherein the gas sorbent has an average particle diameter of 0.1 μm or more and less than 1 mm.

8. The gas sorbent of any one of claims 1-7, wherein the gas comprises carbon dioxide.

9. A carbon dioxide separation recovery system using the gas sorbent of claim 8.

10. The carbon dioxide separation recovery system of claim 9 configured to separate and recover carbon dioxide contained in industrial exhaust gas.

11. A carbon dioxide separation recovery method using the gas sorbent of claim 8.

12. The carbon dioxide separation recovery method of claim 11 configured to separate and recover carbon dioxide contained in industrial exhaust gas.

# Fig.1

# Fig.2

Fig.3

**EP 3 437 731 A1**

## INTERNATIONAL SEARCH REPORT

| | International application No. |
| --- | --- |
| | PCT/JP2017/009803 |

**A. CLASSIFICATION OF SUBJECT MATTER**
*B01J20/28*(2006.01)i, *B01D53/62*(2006.01)i, *B01D53/81*(2006.01)i, *B01J20/22*
(2006.01)i, *C07F9/54*(2006.01)n

According to International Patent Classification (IPC) or to both national classification and IPC

**B. FIELDS SEARCHED**

Minimum documentation searched (classification system followed by classification symbols)
B01J20/28, B01D53/62, B01D53/81, B01J20/22, C07F9/54

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2012-66157 A  (Panasonic Corp.),<br>05 April 2012 (05.04.2012),<br>claims; paragraphs [0020] to [0021]; examples<br>& WO 2010/082456 A1 | 1-2,7<br>3-4<br>5-6,8-12 |
| Y | WO 2015/069799 A1  (UNIVERSITY OF NOTRE DAME DU LAC),<br>14 May 2015 (14.05.2015),<br>claims; paragraphs [0004] to [0018]<br>& US 2016/0288051 A1 | 1-12 |
| Y | JP 2009-106909 A  (National Institute of Advanced Industrial Science and Technology),<br>21 May 2009 (21.05.2009),<br>claims; paragraphs [0018] to [0020]<br>(Family: none) | 1-12 |

☒  Further documents are listed in the continuation of Box C.          ☐  See patent family annex.

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>02 May 2017 (02.05.17) | Date of mailing of the international search report<br>23 May 2017 (23.05.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/009803 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-133219 A  (NGK Insulators, Ltd.), 24 July 2014 (24.07.2014), claims; paragraphs [0016] to [0019], [0023] to [0024], [0031]; examples (Family: none) | 1-12 |
| Y | JP 2009-12996 A  (Enex Co., Ltd.), 22 January 2009 (22.01.2009), claims; paragraphs [0019] to [0026]; examples (Family: none) | 1-12 |

Form PCT/ISA/210 (continuation of second sheet) (January 2015)

**EP 3 437 731 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RONALD S. EISINGER et al.** *Energy Fuels,* 2014, vol. 28, 7070-7078